# EUROPEAN PATENT SPECIFICATION

(11) **EP 4 532 307 B1**
(45) Date of publication and mention of the grant of the patent: **21.10.2026**
(21) Application number: 23726573.1
(22) Date of filing: 17.05.2023
(51) Int. Cl.: B62K 7/04, B62K 21/00

(54) **CARGO BIKE**
FRACHTFAHRRAD
VÉLO-CARGO

(30) Priority: 27.05.2022 GB 202207890
(43) Date of publication of application: 09.04.2025
(73) Proprietor: Stones, Colin Andrew, Lancaster Lancashire LA1 2JW (GB)
(72) Inventor: Stones, Colin Andrew, Lancaster Lancashire LA1 2JW (GB)
(74) Representative: Sewell, Adrian David
(86) International application number: PCT/GB2023/051295
(87) International publication number: WO 2023/227864

(56) References cited:
- BE-A- 383 342
- DE-U1- 29 700 515
- GB-A- 190 519 750
- GB-A- 383 454
- GB-A- 482 082
- NL-C- 38 782
- NL-C- 66 561

## Description

The present invention relates to a cargo bike for transporting cargo and in particular, but not exclusively, to a pedal-powered cargo bicycle for transporting goods, animals or children.

Conventional cargo bikes typically include one or two front wheels, a rear wheel, a saddle located over the rear wheel, a drive chain coupled to a set of pedals for driving the rear wheel, a steering mechanism for steering the front wheel/s, and a cargo box for transporting cargo, such as shopping, pets, or children. The steering mechanism may be directly coupled to a set of handlebars by rods, linkages, gears and chains, or the like, or the front wheel/s may hydraulically steered. However, in view of the relatively long length of cargo bikes, the turning circle is relatively large and conventional cargo bikes are undesirably difficult and awkward to manoeuvre when being pedalled or when being pushed on foot, particularly in relatively confined spaces such as around town and in warehouses, schools, shops, play areas, allotments, etc. In addition, conventional cargo bikes are notoriously unstable when cornering in view of being relatively narrow and tall, and can also tend to rear up when braking particularly when the bike includes two front braked wheels. In view of the front and rear sections of conventional cargo bikes being fixed as a single unit, the weight of the rider is transferred to the front wheel/s and to any intermediate wheel/s if included. Therefore, the maximum weight of cargo transportable by the cargo bike is significantly limited by the maximum load capacity of the front/intermediate tyres. Furthermore, conventional cargo bikes are particularly cumbersome to store, transport or push around confined spaces on foot. Examples of known cargo bikes are described in GB383454A, NL66561C, GB19750A, GB482082A, DE29700515U1, BE383342A, and NL38782C. GB482082A discloses a cargo section that can be coupled to the drive section of a cargo bike.

It is an aim of certain embodiments of the present invention to provide a cargo bike that is easier to store, transport and manoeuvre than conventional cargo bikes, particularly when on foot, and which has a relatively small turning circle.

According to a first aspect of the present invention there is provided a cargo bike comprising:
a leading cargo section for receiving cargo and comprising at least one leading wheel for supporting the cargo section and a steering arrangement for selectively steering the at least one leading wheel; and
a trailing drive section coupled to the cargo section and comprising a seat for supporting a person, at least one trailing wheel for supporting the drive section, and a drive arrangement for rotating the at least one trailing wheel,
wherein the drive section is rotatable with respect to the cargo section about a substantially vertical pivot axis defined by a pivot arrangement coupling the drive section to the cargo section,
the pivot arrangement comprises an elongate and tubular head member coaxially mounted on and rotatable with respect to an elongate pivot member, wherein a lower end region of the pivot member extends from a lower end of the tubular head member and is couplable to a lower rear region of the cargo section, and wherein an upper end region of the pivot member comprises an aperture to receive a locking member selectively movable from a locked position to an unlocked position to respectively couple or decouple the pivot arrangement to or from an upper rear region of the cargo section.

Optionally, the lower end region of the pivot member is locatable in an aperture of a lower support lug extending from the lower rear region of the cargo section. Optionally, the locking member extends through an aperture in an upper support lug extending from the upper rear region of the cargo section.

Optionally, the pivot member comprises a lower shoulder for engaging a lower bearing of the head member, an upper shoulder for engaging an upper bearing of the head member, and a clamp member locatable on the upper shoulder to axially retain the head member on the pivot member and comprising the aperture for receiving the locking member.

Optionally, the locking member is urged towards the locked position by a spring.

Optionally, the locking member comprises a handle portion for moving the locking member from the locked position to the unlocked position.

Optionally, the tubular head member is coupled to a frame to which the seat, the trailing wheel and the drive arrangement are mounted.

Optionally, the frame comprises an elongate top member pivotally coupled at a first end region to the tubular head member and at a second end region to an upper end region of an elongate strut member, and an elongate bottom member pivotally coupled at a first end region to the tubular head member and at a second end region to a lower end region of the strut member.

Optionally, the strut member is oriented substantially parallel with the pivot axis.

Optionally, the top member and the bottom member are substantially coplanar and converge towards each other in a direction away from the strut member.

Optionally, the top member and the bottom member are each oriented by around 60 degrees with respect to the strut member when the leading wheel and the trailing wheel are on a flat surface and the frame is in an equilibrium state.

Optionally, the top member and the bottom member are each rotatable with respect to the head member and the strut member in response to the head member moving vertically with respect to the strut member and vice versa.

Optionally, the steering arrangement comprises a set of opposed handlebars extending from an upper end region of an elongate steering member rotatably mounted in an elongate steering tube such that a lower end region of the steering member extends from the lower end of the steering tube and is coupled to the leading wheel by a coupling arrangement.

Optionally, an axis of the steering tube is substantially parallel with the pivot axis.

Optionally, the coupling arrangement comprises a first steering arm extending from the lower end region of the steering member, a second steering arm extending from a fork member supporting the leading wheel, and a plurality of pivotally coupled members extending therebetween.

Optionally, the leading wheel is mounted at proximal to a front portion of the cargo section and a pair of opposed intermediate wheels are mounted proximal to a rear portion of the cargo section.

Optionally, the leading wheel is mounted forwardly of a storage region of the cargo section for locating and transporting cargo.

### Description of the Drawings

Certain embodiments of the present invention will now be described with reference to the accompanying drawings in which:
Figure 1 illustrates a side view of a cargo bike according to certain embodiments of the present invention showing rear and intermediate portions thereof;
Figure 2 illustrates a side view showing a front portion of the cargo bike of Figure 1;
Figure 3 illustrates a plan view of the rear and intermediate portions of the cargo bike; and
Figure 4 illustrates a plan view of the steering mechanism to steer the front wheel of the cargo bike.

### Detailed Description

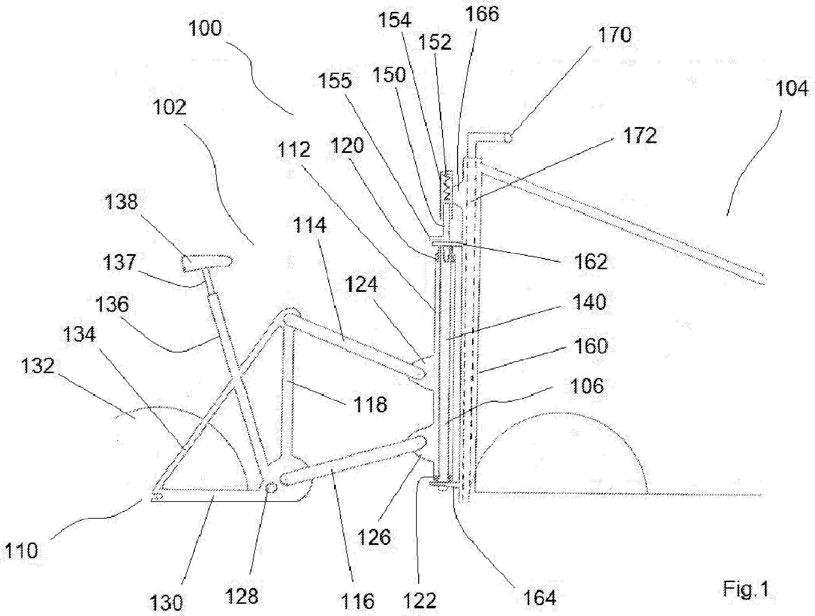

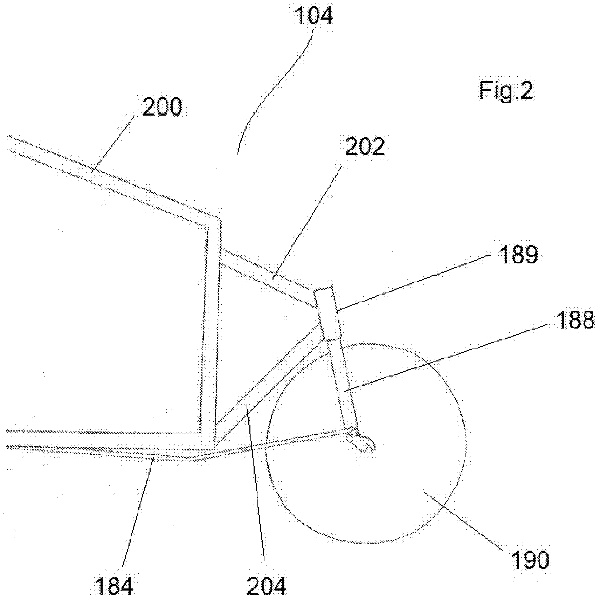

As illustrated in Figures 1 and 2, a cargo bike 100 according to certain embodiments of the present invention includes a rear section 102 pivotally coupled to a front section 104 by a pivot arrangement 106 which defines a substantially vertical pivot axis 108 about which the rear section 102 can rotate with respect to the front section 104 and vice versa.

The rear section 102 includes a main frame 110 comprising an elongate head member 112, an elongate top member 114, an elongate bottom member 116, and an elongate strut member 118. The head member 112 forms part of the vertically oriented pivot arrangement 106 and is substantially parallel with the strut member 118. The head member 112 is substantially tubular and defines the pivot axis. Upper and lower bearings 120,122 are mounted at each end of the head member 112. A pair of spaced apart lugs 124,126 extend rearwardly from the tube and each include a through hole substantially centrally therein for receiving a pin or bolt or the like. The lugs may be an integral part of the head member 112 or may be fixed, such as by welding, to the outer surface of the head member. The top member 114 is pivotally attached at one end to the upper lug 124 by a nut and bolt or the like, and the bottom member 116 is pivotally attached at one end to the lower lug 126 by a nut and bolt or the like. The other end of the top member 114 is pivotally attached to the upper end region of the vertical strut member 118 by a nut and bolt or the like, and the other end of the bottom member 116 is pivotally attached to the lower end region of the vertical strut member 118 by a nut and bolt or the like. The upper end region of the strut member 118 is enlarged to define an upper connection node region including a through hole for receiving the bolt or pin for pivotally attaching the top member 114 thereto. The lower end region of the strut member 118 is also enlarged to define a lower connection node region including a through hole for receiving the bolt or pin for pivotally attaching the bottom member 116 thereto. The lower node region is larger than the upper node region and further includes a through bore 128 for rotatably supporting a crank set (not shown) including crank arms, pedals and a chain ring. A pair of spaced apart chain stays 130 extend rearwardly from the lower node region of the strut member 118 and on each side of a rear wheel 132 which includes an axle and at least one drive gear coupled to the chain ring by a chain for rotatably driving the rear wheel via the pedals like a conventional bicycle. Alternatively, the rear wheel may be belt driven and/or driven by an electrical or fuel-powered motor. A pair of spaced apart seat stays 134 extend downwardly and rearwardly from the upper node region of the strut member 118 and on each side of the rear wheel 132 to join a respective one of the chain stays 130. An elongate seat member 136 extends rearwardly and upwardly from the lower node region of the strut member 118 and between the seat stays 134 before terminating at or above the upper node region of the strut member 118. The seat stays 134 may be integral with or attached to the seat member 136 by welding or the like.

The seat member 136 and strut member 118 are substantially tubular and the seat member 136 supports a seat 138 mounted to a seat post 137 slidably received into the open upper end of the seat member 136. The top member 114 and the bottom member 116 may each be a single bracket mounted on one side of the respective lug and the strut member 118 or a pair of spaced apart and parallel brackets each mounted to a respective side of the lug and strut member 118. Alternatively, the top member 114 and bottom member 116 may each be substantially tubular and have a yoke at each end for pivotally coupling to the respective lug and strut member by a pin or bolt or the like. Further alternatively, the top member 114 and bottom member 116 may each be a single member pivotally coupled at each end between a pair of spaced apart lugs. In use, the head member 112 and in turn the pivot axis remains substantially vertical and the top member 114 and bottom member 116 are free to move between around 0 and 30 degrees with respect to the horizontal to accommodate any vertical movement of the front section 104 of the bike caused by undulations, bumps or recesses etc. in the surface over which the bike is moving. This pivot arrangement of the top and bottom members with respect to the head member and the strut member also proactively stabilises the bike, particularly when cornering, by pushing the head member downwardly with the top member and pulling the same downwardly with the bottom member. The forces generated by the rider's weight being substantially forward of the rear wheel contact patch causes a push-down or compression force in the top member into the head member which in turn is countered by a pull-back or tension force in the bottom member. As a result, the head member 112 is urged downwardly which in turn urges the cargo section, particularly the intermediate wheel/s thereof, downwardly towards the ground over which the bike is travelling to thereby increase friction and grip and also hold the bike, particularly the cargo section, to the ground.

Each pivot coupling may include a torsion spring or the like to provide some resilience to said rotation of the top and bottom members in use. Alternatively, the top member 114 and bottom member 116 may be fixed to the head member 112 and the strut member 118. The pivot arrangement 106 and/or the front section 104 of the bike 100 may include a damper arrangement to allow the front and rear sections to move relative to each other and accommodate bumps and undulations or the like.

As illustrated in Figure 1, the pivot arrangement 106 comprises the tubular head member 112 and an elongate pivot member 140 coaxially mounted therein and extending from each end of the head member 112.

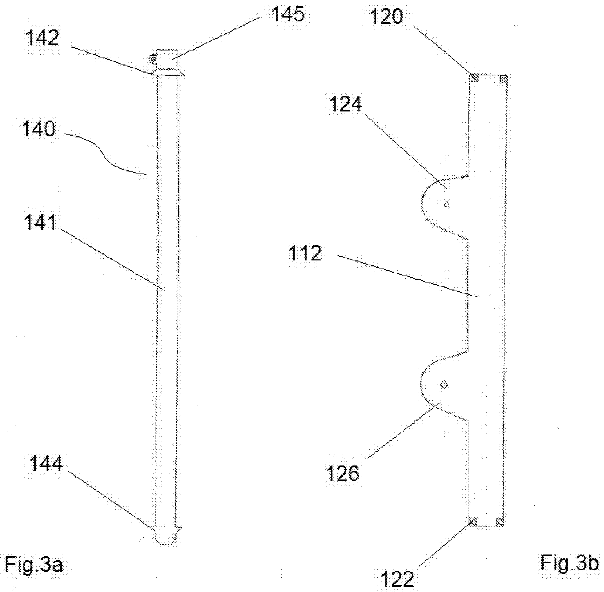

As illustrated in Figures 3a and 3b, the pivot member 140 comprises an elongate body portion 141 having opposed upper and lower end regions. The lower end region includes a collar or shoulder 144 for engaging the lower bearing 122 mounted in/on the lower end of the head member 112 and for axially retaining the head member 112 with respect to the pivot member 140 whilst allowing the head member 112 to rotate relative to the pivot member 140. The lower collar or shoulder 144 may be integrally formed/machined with the elongate main body of the pivot member or may be welded thereto or pressed thereon for example.

To assemble the pivot arrangement 106, the head member 112 is located on the pivot member 140 (or the pivot member 140 is located into the head member 112 via the open lower end) until the lower bearing 122 of the head member 112 engages the lower shoulder/collar 144 of the pivot member 140. An upper collar/shoulder 142 is aptly removable and is locatable on the upper end of the pivot member 140 to engage with the upper bearing 120. Aptly, the upper collar/shoulder 142 is tapered to cover the upper bearing 120 whilst allowing water run off to protect the bearing below from water and dirt ingress or the like. The assembly is held securely together by a top clamp 145 located on the upper end of the pivot member 140 and tightened. Alternatively, the upper section of the pivot arrangement 106 may be fixed, such as by welding or the like, to the pivot member 140 to securely hold the assembly together. Aptly, the top clamp 145 comprises an open upper end, such as a bore or recess, for receiving a locking pin 150 as described further below.

As illustrated in Figure 1, the front section 104 of the cargo bike 100 includes a steering tube 160 having an upper lug 162 and a lower lug 164 each extending rearwardly therefrom and oriented substantially horizontally. Each lug 162,164 includes an aperture such that the apertures therein are substantially vertically aligned with each other. The aperture in the lower lug 164 is sized to receive and support the lower end region of the pivot member 140. The lower collar/shoulder 144 of the pivot member 140 may be tapered as illustrated in Figure 3a and the aperture in the lower support lug 164 may be correspondingly tapered/countersunk to accommodate the tapered lower collar/shoulder to help locate and guide the same into the aperture in use and to increase the holding friction therebetween. The length of the pivot member 140 substantially corresponds to the spacing between the support lugs 162,164 such that the upper end of the pivot member 140 engages the underside of the upper support lug 162 whilst allowing the pivot arrangement 106 to be located between the support lugs 162,164 to couple the rear section 102 of the bike to the front section 104 of the bike in use. In use, the rear section 102 of the bike is tilted back to angle the pivot arrangement 106 rearwardly and allow the lower end of the pivot member 140 to be located in the aperture of the lower support lug 164. The pivot arrangement 106 is then angled forwardly such that the upper end of the pivot member 140 is located below the upper support lug 162. Alternatively, the support lugs 162,164 may not extend from the steering tube 160 and may extend from or be mounted on a different part of the front section 104 of the bike 100.

As illustrated in Figure 1, an upper end of the locking pin 150 is biased downwardly by a spring 152 located in a spring tube 154 attached to the upper end region of the steering tube 160 by a vertically oriented flange 166. The locking pin 150 includes a handle portion 155 extending perpendicularly therefrom to allow a user to lift the locking pin 150 upwardly and against the force of the spring 152. This allows the pivot arrangement 106 to be located between the support lugs 162,164. When the top clamp 145 is located below and aligned with the aperture in the upper support lug 162, the locking pin 150 can be released or lowered such that the lower end of the locking pin 150 engages in the open upper end of the top clamp 145 to thereby securely couple the rear section 102 of the bike to the front section 104 of the bike. Likewise, the front section of the bike can easily be decoupled from the rear section of the bike as and when desired, such as for storage or transportation or for when the user wishes to manoeuvre the front section of the bike on foot like a trolley, e.g. in particularly confined spaces and/or when a destination has been reached such as a school or shopping centre for example.

As illustrated in Figure 1, a set of opposed handlebars 170 extend from an upper end region of an elongate steering member 172 rotatably mounted in the steering tube 160 such that a lower end region of the steering member 172 extends from the lower end of the steering tube 160. The steering member may be mounted in one or more bearings to rotatably support the steering member in the steering tube.

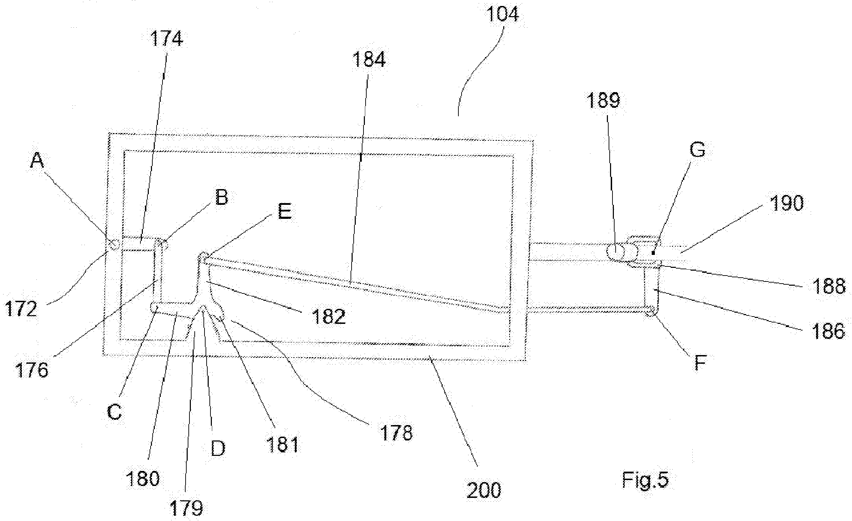

As illustrated in Figure 5, the lower end region of the steering member 172 extends forwardly from the main body of the steering member 172 and substantially perpendicularly from a steering axis A of the steering member 172 to define a first steering arm 174. The free end of the first steering arm 174 is pivotally coupled at a pivot axis B to a first elongate connecting member 176 oriented substantially perpendicularly to the first steering arm 174 when the same is oriented substantially forwardly (as illustrated) to in turn forwardly orient a front wheel 190 rotatably mounted to the front end of the front section 104 of the bike. A substantially L-shaped coupling member 178 having two main arms 180,182 is pivotally mounted at pivot axis D to a lug 179 extending inwardly from a frame 200 of the front section 104. The coupling member 178 is oriented substantially horizontally and pivotally mounted to the frame at or proximal its centre where its two arms come together. The coupling member 178 includes a shorter third arm 181 extending from its centre region and away from the main arms thereof which is configured to abut a stop surface of the frame or lug 179 when the steering is on full left-hand lock to thereby prevent oversteering to the left. A similar stop is provided to prevent oversteering to the right. A first main arm 180 of the coupling member 178 is pivotally coupled at pivot axis C to the first connecting member 176 and a second main arm 182 of the coupling member 178 is pivotally coupled at pivot axis E to a first end region of a second elongate connecting member 184. The second end region of the second connecting member 184 is pivotally coupled at pivot axis F to a free end region of a second steering arm 186 extending from one of a pair of forks 188 to which the front wheel 190 is rotatably mounted via a hub/axle. The forks 188 are rotatably attached to a front head tube 189 to be selectively rotatable about an axis of the head tube in response to a direction of rotation of the handlebars 170 by the user. The second connecting member 184 is angled horizontally and vertically (as illustrated in Figures 2 and 5) to avoid contacting the front wheel when the same is on full left lock and to avoid contacting the front of the cargo section.

Aptly, the distance between steering axis A and pivot axis B and the distance between pivot axis C and pivot axis D are substantially equal and substantially parallel with each other. Furthermore, the distance between pivot axis D and pivot axis E and the distance between pivot axis F and point G (centre of the leading wheel) are substantially equal. Aptly, the responsiveness of the steering may be adjusted by increasing or decreasing the distance between pivot axes F and G and also D and E. The distance between these corresponding pivot axes may be selectively adjusted by the user, e.g. the end of the second main arm 182 and/or the second steering arm 186 may include an adjustable rose joint, or the second main arm 182 and/or the second steering arm 186 may include a plurality of holes for selectively moving pivot axis E towards or away from pivot axis D and likewise pivot axis F towards or away from pivot axis G.

The steering mechanism is a direct mechanical coupling arrangement of pivotally coupled members but other forms of coupling a steering wheel or handlebars to the leading front wheel/s may be suitable, such as sprockets and chain/s, hydraulic systems, drive-by-wire, electric motor/s systems, or the like.

As illustrated in Figure 2, the forks 188 are angled slightly backwardly and attached to the main frame 200 of the front section 104 of the bike 100 by an upper member 202 and a lower member 204. The forks may optionally include suspension to accommodate for undulations and bumps or the like. Alternatively, the front/leading wheel may be mounted under the front end region of the cargo section and trail a steering axis akin to a shopping trolley wheel. Such a front wheel may be a single wheel centrally mounted under the front end region of the cargo section or two spaced apart front wheel each mounted under a front corner region of the cargo section.

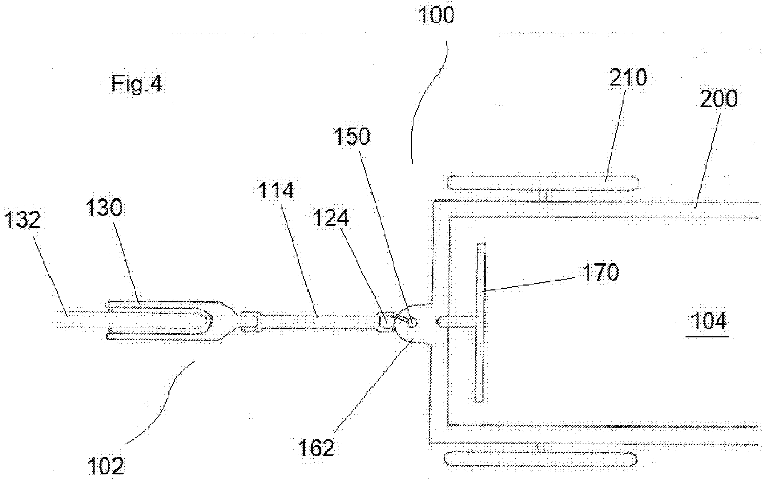

As illustrated in Figure 4, a rear portion of the front section 104 of the bike 100 is supported on a pair of intermediate wheels 210, i.e. the front section is mounted on three wheels, which provides a particularly stable front section when being pushed along by the trailing rear section 102 or when decoupled from the rear section and being pushed along as a trolley by a user on foot. Aptly, the intermediate wheels 210 may be powered by one or more electric motors for propelling the front section along when in 'trolley mode'. Aptly, a user can manually steer the front section via the handlebars 170 and the speed and direction of the trolley may be controlled via at least one button, roller or lever mounted on the handlebars. Furthermore, one or more of the front, rear and intermediate wheels may be selectively braked via a brake actuator, such as a brake lever, mounted on the front section of the bike, such as on the handlebars. Preferably, the front section 104 is mounted on two spaced apart and opposed intermediate wheels 210 and a single leading front wheel 190. Aptly, the intermediate wheels are selectively braked by a suitable brake arrangement, such as independent calliper, drum or disc brakes.

The main frame 200 of the front section 104 of the bike 100 is configured to receive and support a cargo container or the main frame may be boarded to define a cargo space itself. Alternatively, the main frame may be a chassis and support a flatbed surface for transporting cargo thereon instead of being a container. A floor section of the container or flatbed will mount above the steering mechanism to hide and protect the same from users and cargo being transported.

Alternative embodiments of the above-described bike can be envisaged without departing from the present invention, such as the bike having three inline wheels (front, intermediate and rear) or two rear wheels, two intermediate wheels and a single front steerable wheel or any suitable combination of wheels. For example, the intermediate wheel/s may be omitted and only a front wheel and a rear wheel may be provided. A pair of handles may extend from the frame of the front section to allow the same to be used like a wheelbarrow when decoupled from the rear section. As described above, the rear section 102 may be pedal-, electric- or fuel-powered. The locking pin arrangement 150 may alternatively be electrically operated such as including a solenoid to selectively couple or decouple the front and rear sections of the bike at the press of a button. Further alternatively, a threaded bolt or collar may be tightened or loosened with respect to the pivot arrangement 106 to selectively couple or decouple the front and rear sections of the bike, or a screw-down wheel like the wheel on a fluid gate valve, or a quick-release clamp arrangement may be suitable.

Certain embodiments of the present invention therefore provide a cargo bike which may be driven manually via pedals and/or by an electric motor and which includes a front/leading cargo section which is selectively decouplable from a rear/trailing drive section to allow the bike to be efficiently stored or transported or for the front section to be used as a trolley without the rear section being coupled thereto. It shall be understood that the terms 'front' and 'back and 'leading' and 'trailing' in relation to the front and rear sections of the bike refer to the relationship between the front and rear sections based on the bike pointing or travelling in a forward direction. The cargo bike according to certain embodiments of the present invention is easier to manoeuvre than conventional cargo bikes and has a relatively small turning circle which is particularly desirable in confined spaces such as town centres, schools, shops, warehouses or the like.

## Claims

1. A cargo bike (100) comprising:
a leading cargo section (104) for receiving cargo and comprising at least one leading wheel (190) for supporting the cargo section and a steering arrangement for selectively steering the at least one leading wheel; and
a trailing drive section (102) coupled to the cargo section and comprising a seat (138) for supporting a person, at least one trailing wheel (132) for supporting the drive section, and a drive arrangement for rotating the at least one trailing wheel,
wherein the drive section is rotatable with respect to the cargo section about a substantially vertical pivot axis defined by a pivot arrangement (106) coupling the drive section to the cargo section,
the pivot arrangement (106) comprises an elongate and tubular head member (112) coaxially mounted on and rotatable with respect to an elongate pivot member (140), wherein a lower end region of the pivot member is couplable to a lower rear region of the cargo section (104), and wherein an upper end region of the pivot member (140) comprises an aperture to receive a locking member (150) selectively movable from a locked position to an unlocked position to respectively couple or decouple the pivot arrangement to or from an upper rear region of the cargo section, **characterised in that** the pivot member extends from a lower end of the tubular head member.

2. The cargo bike according to claim 1, wherein the lower end region of the pivot member (140) is locatable in an aperture of a lower support lug (164) extending from the lower rear region of the cargo section.

3. The cargo bike according to any preceding claim, wherein the pivot member (140) comprises a lower shoulder (144) for engaging a lower bearing (122) of the head member (112), an upper shoulder (142) for engaging an upper bearing (120) of the head member, and a clamp member (145) locatable on the upper shoulder to axially retain the head member on the pivot member and comprising the aperture for receiving the locking member.

4. The cargo bike according to any preceding claim, wherein the locking member (150) is urged towards the locked position by a spring (152).

5. The cargo bike according to any preceding claim, wherein the tubular head member (112) is coupled to a frame (110) to which the seat, the trailing wheel and the drive arrangement are mounted.

6. The cargo bike according to claim 5, wherein the frame (110) comprises an elongate top member (114) pivotally coupled at a first end region to the tubular head member (112) and at a second end region to an upper end region of an elongate strut member (118), and an elongate bottom member (116) pivotally coupled at a first end region to the tubular head member and at a second end region to a lower end region of the strut member.

7. The cargo bike according to claim 6, wherein the strut member (118) is oriented substantially parallel with the pivot axis.

8. The cargo bike according to claim 6 or 7, wherein the top member (114) and the bottom member (116) are substantially coplanar and converge towards each other in a direction away from the strut member.

9. The cargo bike according to claim 8, wherein the top member (114) and the bottom member (116) are each oriented by around 60 degrees with respect to the strut member when the leading wheel and the trailing wheel are on a flat surface and the frame is in an equilibrium state.

10. The cargo bike according to claim 9, wherein the top member (114) and the bottom member (116) are each rotatable with respect to the head member and the strut member in response to the head member moving vertically with respect to the strut member and vice versa.

11. The cargo bike according to any preceding claim, wherein the steering arrangement comprises a set of opposed handlebars (170) extending from an upper end region of an elongate steering member (172) rotatably mounted in an elongate steering tube (160) such that a lower end region of the steering member extends from the lower end of the steering tube and is coupled to the leading wheel (190) by a coupling arrangement.

12. The cargo bike according to claim 11, wherein an axis of the steering tube (160) is substantially parallel with the pivot axis.

13. The cargo bike according to claim 11 or 12, wherein the coupling arrangement comprises a first steering arm (174) extending from the lower end region of the steering member, a second steering arm (186) extending from a fork member (188) supporting the leading wheel, and a plurality of pivotally coupled members (178) extending therebetween.

14. The cargo bike according to any preceding claim, wherein the leading wheel (190) is mounted at proximal to a front portion of the cargo section and a pair of opposed intermediate wheels (210) are mounted proximal to a rear portion of the cargo section.

15. The cargo bike according to claim 14, wherein the leading wheel (190) is mounted forwardly of a storage region of the cargo section for locating and transporting cargo.

## Patentansprüche

1. Lastenfahrrad (100), das Folgendes umfasst:
einen vorderen Lastteil (104) zur Aufnahme einer Last, der mindestens ein Vorderrad (190) zum Tragen des Lastteils und eine Lenkanordnung zum selektiven Lenken des mindestens einen Vorderrads umfasst; und
einen hinteren Antriebsteil (102), der mit dem Lastteil gekoppelt ist und einen Sitz (138) zum Tragen einer Person, mindestens ein Hinterrad (132) zum Tragen des Antriebsteils und eine Antriebsanordnung zum Drehen des mindestens einen Hinterrads umfasst,
wobei der Antriebsteil in Bezug auf den Lastteil um eine im Wesentlichen vertikale Schwenkachse drehbar ist, die durch eine den Antriebsteil mit dem Lastteil koppelnde Schwenkanordnung (106) definiert ist,
die Schwenkanordnung (106) ein längliches und rohrförmiges Kopfelement (112) umfasst, das koaxial auf einem länglichen Schwenkelement (140) montiert und in Bezug dazu drehbar ist, wobei eine untere Endregion des Schwenkelements mit einer unteren hinteren Region des Lastteils (104) koppelbar ist, und wobei eine obere Endregion des Schwenkelements (140) eine Öffnung zur Aufnahme eines Verriegelungselements (150) aufweist, das selektiv aus einer verriegelten Position in eine entriegelte Position bewegbar ist, um die Schwenkanordnung jeweils mit einer oberen hinteren Region des Lastteils zu koppeln oder davon zu entkoppeln, **dadurch gekennzeichnet, dass** sich das Schwenkelement von einem unteren Ende des rohrförmigen Kopfelements erstreckt.

2. Lastenfahrrad nach Anspruch 1, wobei die untere Endregion des Schwenkelements (140) in einer Öffnung einer unteren Traglasche (164) positionierbar ist, die sich von der unteren hinteren Region des Lastteils erstreckt.

3. Lastenfahrrad nach einem vorherigen Anspruch, wobei das Schwenkelement (140) eine untere Schulter (144) zum Eingreifen in ein unteres Lager (122) des Kopfelements (112), eine obere Schulter (142) zum Eingreifen in ein oberes Lager (120) des Kopfelements und ein Klemmelement (145) umfasst, das auf der oberen Schulter positionierbar ist, um das Kopfelement axial am Schwenkelement zu halten, und die Öffnung zur Aufnahme des Verriegelungselements aufweist.

4. Lastenfahrrad nach einem vorherigen Anspruch, wobei das Verriegelungselement (150) durch eine Feder (152) in Richtung der Verriegelungsposition vorgespannt wird.

5. Lastenfahrrad nach einem vorherigen Anspruch, wobei das rohrförmige Kopfelement (112) mit einem Rahmen (110) gekoppelt ist, an dem der Sattel, das Hinterrad und die Antriebsanordnung montiert sind.

6. Lastenfahrrad nach Anspruch 5, wobei der Rahmen (110) ein längliches oberes Element (114) umfasst, das an einer ersten Endregion schwenkbar mit dem rohrförmigen Kopfelement (112) und an einer zweiten Endregion mit einer oberen Endregion eines länglichen Strebenelements (118) gekoppelt ist, sowie ein längliches unteres Element (116), das an einer ersten Endregion schwenkbar mit dem rohrförmigen Kopfelement und an einer zweiten Endregion mit einer unteren Endregion des Strebenelements gekoppelt ist.

7. Lastenfahrrad nach Anspruch 6, wobei das Strebenelement (118) im Wesentlichen parallel zur Schwenkachse orientiert ist.

8. Lastenfahrrad nach Anspruch 6 oder 7, wobei das obere Element (114) und das untere Element (116) im Wesentlichen koplanar sind und in einer vom Strebenelement wegführenden Richtung aufeinander zulaufen.

9. Lastenfahrrad nach Anspruch 8, wobei das obere Element (114) und das untere Element (116) jeweils um etwa 60 Grad in Bezug auf das Strebenelement orientiert sind, wenn das Vorderrad und das Hinterrad sich auf einer ebenen Fläche befinden und der Rahmen sich in einem Gleichgewichtszustand befindet.

10. Lastenfahrrad nach Anspruch 9, wobei das obere Element (114) und das untere Element (116) jeweils in Bezug auf das Kopfelement und das Strebenelement drehbar sind, wenn sich das Kopfelement vertikal in Bezug auf das Strebenelement bewegt und umgekehrt.

11. Lastenfahrrad nach einem vorherigen Anspruch, wobei die Lenkanordnung einen Satz gegenüberliegender Lenkstangen (170) umfasst, die sich von einer oberen Endregion eines länglichen Lenkelements (172) erstrecken, das drehbar in einem länglichen Lenkrohr (160) montiert ist, so dass sich eine untere Endregion des Lenkelements vom unteren Ende des Lenkrohrs erstreckt und über eine Kupplungsanordnung mit dem Vorderrad (190) gekoppelt ist.

12. Lastenfahrrad nach Anspruch 11, wobei eine Achse des Lenkrohrs (160) im Wesentlichen parallel zur Schwenkachse verläuft.

13. Lastenfahrrad nach Anspruch 11 oder 12, wobei die Kupplungsanordnung einen sich von der unteren Endregion des Lenkelements erstreckenden ersten Lenkarm (174), einen sich von einem das Vorderrad tragenden Gabelelement (188) erstreckenden zweiten Lenkarm (186) und mehrere sich dazwischen erstreckende schwenkbar gekoppelte Elemente (178) umfasst.

14. Lastenfahrrad nach einem vorherigen Anspruch, wobei das Vorderrad (190) nahe einem vorderen Abschnitt des Lastteils montiert ist und ein Paar gegenüberliegender Zwischenräder (210) nahe einem hinteren Abschnitt des Lastteils montiert ist.

15. Lastenfahrrad nach Anspruch 14, wobei das Vorderrad (190) vor einer Stauregion des Lastteils montiert ist, um Ladung unterzubringen und zu transportieren.

## Revendications

1. Vélo cargo (100), comprenant :
un espace de chargement avant (104), où sont reçues des charges et comportant au moins une roue avant (190) ayant pour fonction de supporter ledit espace de chargement, et un système de direction permettant de manœuvrer sélectivement la au moins une roue avant ; et
une section arrière motrice (102) qui est reliée à l'espace de chargement et est dotée d'une selle (138) pour supporter une personne, au moins une roue arrière (132) ayant pour fonction de supporter la section motrice, et un système de transmission pour faire tourner la au moins une roue arrière,
dans lequel la section motrice peut, par rapport à l'espace de chargement, tourner autour d'un axe de pivotement essentiellement vertical que définit un dispositif de pivotement (106) reliant la section motrice à l'espace de chargement,
le dispositif de pivotement (106) est doté d'un élément de tête allongé et tubulaire (112) coaxialement monté sur un élément de pivotement allongé (140) et pouvant tourner par rapport à ce dernier, dans lequel une région d'extrémité inférieure de l'élément de pivotement peut être reliée à une région arrière inférieure de l'espace de chargement (104), et dans lequel une région d'extrémité supérieure de l'élément de pivotement (140) comprend une ouverture destinée à recevoir un élément de verrouillage (150) qui peut sélectivement passer d'une position verrouillée à une position déverrouillée pour, respectivement, joindre le dispositif de pivotement à une région arrière supérieure de l'espace de chargement et l'en séparer, **caractérisé en ce que** l'élément de pivotement s'étend à partir d'une extrémité inférieure de l'élément de tête tubulaire.

2. Vélo cargo selon la revendication 1, dans lequel la région d'extrémité inférieure de l'élément de pivotement (140) peut être logée dans une ouverture d'une patte de support inférieure (164) s'étendant à partir de la région arrière inférieure de l'espace de chargement.

3. Vélo cargo selon l'une quelconque des revendications précédentes, dans lequel l'élément de pivotement (140) comprend un épaulement inférieur (144) destiné à entrer en prise avec un palier inférieur (122) de l'élément de tête (112), un épaulement supérieur (142) destiné à entrer en prise avec un palier supérieur (120) de l'élément de tête, ainsi qu'un élément de serrage (145) pouvant être situé sur l'épaulement supérieur afin de maintenir axialement l'élément de tête sur l'élément de pivotement et comportant l'ouverture destinée à recevoir l'élément de verrouillage.

4. Vélo cargo selon l'une quelconque des revendications précédentes, dans lequel l'élément de verrouillage (150) est sollicité vers la position verrouillée par un ressort (152).

5. Vélo cargo selon l'une quelconque des revendications précédentes, dans lequel l'élément de tête tubulaire (112) est relié à un cadre (110) sur lequel sont montés la selle, la roue arrière et le système de transmission.

6. Vélo cargo selon la revendication 5, dans lequel le cadre (110) comprend un élément supérieur allongé (114), relié de manière pivotante à hauteur d'une première région d'extrémité à l'élément de tête tubulaire (112) et à hauteur d'une seconde région d'extrémité à une région d'extrémité supérieure d'un élément d'entretoise allongé (118), ainsi qu'un élément inférieur allongé (116), relié de manière pivotante à hauteur d'une première région d'extrémité à l'élément de tête tubulaire et à hauteur d'une seconde région d'extrémité à une région d'extrémité inférieure de l'élément d'entretoise.

7. Vélo cargo selon la revendication 6, dans lequel l'élément d'entretoise (118) est essentiellement orienté parallèlement à l'axe de pivotement.

8. Vélo cargo selon soit la revendication 6, soit la revendication 7, dans lequel l'élément supérieur (114) et l'élément inférieur (116) sont essentiellement coplanaires et convergent l'un vers l'autre dans une direction éloignée de l'élément d'entretoise.

9. Vélo cargo selon la revendication 8, dans lequel l'élément supérieur (114) et l'élément inférieur (116) sont chacun orientés d'environ 60 degrés par rapport à l'élément d'entretoise, lorsque la roue avant et la roue arrière se trouvent sur une surface plane et que le cadre se trouve en situation d'équilibre.

10. Vélo cargo selon la revendication 9, dans lequel l'élément supérieur (114) et l'élément inférieur (116) peuvent tous deux tourner par rapport à l'élément de tête et à l'élément d'entretoise, en réaction au déplacement vertical de l'élément de tête par rapport à l'élément d'entretoise et vice versa.

11. Vélo cargo selon l'une quelconque des revendications précédentes, dans lequel le système de direction comprend un ensemble de guidons opposés (170) s'étendant à partir d'une région d'extrémité supérieure d'un élément de direction allongé (172) monté de façon à pouvoir tourner dans un tube de direction allongé (160), de sorte qu'une région d'extrémité inférieure de l'élément de direction s'étend à partir de l'extrémité inférieure du tube de direction et est reliée à la roue avant (190) par un dispositif de couplage.

12. Vélo cargo selon la revendication 11, dans lequel un axe du tube de direction (160) est essentiellement parallèle à l'axe de pivotement.

13. Vélo cargo selon soit la revendication 11, soit la revendication 12, dans lequel le dispositif de couplage comprend un premier arbre de direction (174) s'étendant à partir de la région d'extrémité inférieure de l'élément de direction, un second bras de direction (186) s'étendant à partir d'un élément de fourche (188) supportant la roue avant, et une pluralité d'éléments couplés de manière pivotante (178) s'étendant entre ceux-ci.

14. Vélo cargo selon l'une quelconque des revendications précédentes, dans lequel la roue avant (190) est montée à proximité d'une partie frontale de l'espace de chargement, et une paire de roues intermédiaires situées en vis-à-vis (210) sont montées à proximité d'une partie arrière de l'espace de chargement.

15. Vélo cargo selon la revendication 14, dans lequel la roue avant (190) est montée en avant d'une région de stockage de l'espace de chargement où se situent et se transportent les charges.
